# EUROPÄISCHE PATENTANMELDUNG

(11) **EP 1 571 589 A2**
(43) Veröffentlichungstag der Anmeldung: **07.09.2005**
(21) Anmeldenummer: 04101392.1
(22) Anmeldetag: 02.04.2004
(51) Int. Cl.: G06K 17/00

(54) **Verfahren, um Informationen über ein Produkt zu erhalten**

(30) Priorität: 03.03.2004 EP 04100864; 16.03.2004 EP 04101080
(71) Anmelder: Swisscom Mobile AG, 3050 Bern (CH)
(72) Erfinder: Lauper, Eric, 3014 Bern (CH)
(74) Vertreter: P&TS Patents & Technology Surveys SA

(57) **Zusammenfassung**

Verfahren, um Information über ein Produkt (1) zu erhalten, mit folgenden Schritten:
das Produkt (1) wird mit einem Code (100) markiert, der in einem RFID-Tag (10) abgelegt ist,
der benannte Codes wird kontaktlos mit einem RFID-Lesegerät (2, 3) gelesen,
ein Parameter wird aus dem Mobilgerät ermittelt,
das Lesegerät (2, 3) verpackt den Code und den Parameter in eine Meldung,
das Lesegerät (2, 3) sendet die Meldung über ein Telekommunikationsnetz (4) an einen Namen-Dienstserver (6),
der Namen-Dienstserver (6) antwortet mit der Adresse einer oder mehrerer Hypertext-Seiten, wobei die Adresse sowohl vom Code als auch von den Parametern abhängig ist
es wird anhand der benannten Hypertext-Seiten auf die gewünschte Information (7) zugegriffen.

## Beschreibung

Die vorliegende Erfindung betrifft ein Verfahren, mit welchem einem Benutzer Informationen und Dienstleistungen zur Verfügung gestellt werden.

Es sind bereits Verfahren bekannt, um anhand eines sogenannten RFID-Elements (oder Tags) Informationen über ein Produkt zu bekommen. Dabei verfügen manche Tags über einen Speicherbereich, der kontaktlos mit einem RFID-Lesegerät gelesen werden kann, und in welchem die gewünschte Information eingespeichert wird. Da der Preis der Tags stark von der Grösse des Speichers abhängig ist, werden solche Tags vor allem dann eingesetzt, wenn nur wenig Information benötigt wird; beispielsweise das Produktherstellungsdatum, eine Seriennummer, usw.

Es sind auch andere Verfahren bekannt, in welchen die gewünschte Information aus einer externen Datenbank abgeholt wird, in welcher mehrere Tags betreffende Informationen abgelegt werden. In diesem Fall wird ein Code im Tag gelesen und als Recherchenkriterium in der externen Datenbank verwendet, aus welcher die gewünschte Information abgeholt wird. Dabei ist die Verknüpfung zwischen einem Produkt und dem Datensatz in der Datenbank statisch und permanent; ein mit einem Tag markiertes Produkt ergibt stets Zugriff auf die gleiche Information.

Der angebotene Informationsinhalt ist dabei meistens nur von der Klasse des Objekts (Typ des Produkts) abhängig. Es sind jedoch auch Verfahren bekannt, bei welchen alle individuellen Objekte durch einen individuellen Code im RFID-Tag gekennzeichnet sind (beispielsweise mit einer Seriennummer). Mit diesem individuellen Code kann für jedes einzelne Produkt eine produktspezifische Information (beispielsweise das Verfalldatum oder die Dauer der Garantie) aus einer externen Datenbank abgeholt werden.

Oft benötigen aber unterschiedliche Benutzer in unterschiedlichen Situationen unterschiedliche Informationen über dasselbe Produkt. Ein Produkthersteller will beispielsweise wissen, wann das Produkt hergestellt wurde, währenddessen sich ein Endbenutzer vielleicht mehr für das Verfalldatum interessiert. Auch die Sprache der gewünschten Information ist benutzerabhängig.

Oft wird ein einheitlicher umfassender Informationeninhalt angeboten, der alle unterschiedlichen Bedürfnisse erfüllen soll. Ein solcher Inhalt lässt sich jedoch nur langsam und teuer durch das Telekommunikationsnetz übertragen und ist aufwendig zu lesen.

Die Adresse der Datenbank, in welcher die gewünschte Information abgelegt ist, muss ausserdem dem Lesegerät bekannt und von diesem erreichbar sein. Eine Änderung dieser Adresse ist nur möglich, wenn alle Benutzer informiert wurden, was die Einsatzmöglichkeit noch einschränkt.

Oft muss die mit einem Tag verknüpfte Information mehrmals aktualisiert oder ergänzt werden. Dies kann beispielsweise erfolgen, indem eine neue Information oder ein neuer Code in den Speicher des Tags geschrieben wird, was nur im Falle eines teuren wiederbeschreibbaren Tags machbar ist, wobei das Tag ausserdem über genügend Speicher verfügen muss. Solche Tags sind oft zehn bis fünfzig Mal teurer als herkömmliche Read-only Tags.

Es ist daher ein Ziel der vorliegenden Erfindung, ein neues Verfahren und ein neues Tag anzubieten, mit welchen diese Probleme gelöst werden.

Ein anderes Ziel ist es, ein neues Verfahren anzubieten, um Information über ein Produkt zu erhalten, wobei eine ausreichende Flexibilität auch mit billigeren Nur-Lese Tags möglich ist.

Es ist auch ein Ziel der vorliegenden Erfindung, ein Verfahren anzubieten, um Information über ein Produkt zu erhalten, wobei die angebotene Information an verschiedene Bedürfnisse angepasst wird.

Es ist auch ein Ziel der vorliegenden Erfindung, ein Verfahren anzubieten, bei welchem die elektronische Adresse des Speicherbereichs, in welchem die gewünschte Information abgelegt ist, geändert werden kann, ohne dabei alle Benutzer von Lesegeräten informieren zu müssen.

Ein anderes Ziel ist auch, dass unterschiedliche Benutzer (oder ein gleicher Benutzer bei unterschiedlichen Bedingungen) auf unterschiedliche Informationen über ein bestimmtes Produkt zugreifen können.

Diese Ziele werden insbesondere durch ein Verfahren erreicht, um Information über ein Produkt zu erhalten, welches folgende Verfahrensschritte aufweist:
das Produkt wird mit einem Code markiert, der in einem RFID-Tag abgelegt sind,
der benannte Code wird kontaktlos mit einem RFID-Lesegerät gelesen,
das benannte Lesegerät verpackt den benannten Code in eine Meldung,
das benannte Lesegerät sendet die benannte Meldung über ein Telekommunikationsnetz an einen Namen-Dienstserver,
der benannte Namen-Dienstserver antwortet mit der Adresse einer oder mehrerer Hypertext-Seiten,
es wird anhand der benannten Hypertext-Seiten auf die gewünschte Information zugegriffen,
wobei das Lesegerät mindestens einen Parameter, der nicht aus dem benannten RFID-Tag gelesen wird, in die benannte Meldung verpackt,
und wobei die benannte Adresse sowohl von dem benannten Code als auch von den benannten Parametern abhängig ist.

Dies hat den Vorteil, dass die Granularität der angebotenen Information feiner als in bekannten Verfahren ist. Unterschiedliche Benutzer können beispielsweise unterschiedliche Informationen aus einem mit einem Tag versehenen Produkt abholen. Möglich ist auch, dass ein gleicher Benutzer bei unterschiedlichen Bedingungen oder mit anderen Parametern auf eine andere Hypertext-Seite zugreift.

Dies hat auch den Vorteil, dass die gewünschte Information oder Dienstleistung über eine editierbare elektronische Hypertext-Seite bereitgestellt wird.

Die Adresse der Seite entspricht der Kombination des im RFID-Tag gelesenen Codes mit den Parametern. Die Verknüpfung ist nicht statisch, sondern wird in einem Namen-Dienstserver registriert. Dies hat den Vorteil, dass Änderungen der Seitenadresse jederzeit möglich und leicht verfolgbar sind. Dies hat auch den Vorteil, dass es sich um ein universelles System handelt, in welchem Informationen aus jedem Lesegerät in jedem Netz über eine einzige Adresse des Servers bestellt werden können.

Die verwendeten Parameter können erst nach dem Einschreiben des Codes während der Personalisierung des RFID-Tags ermittelt werden. Dies hat den Vorteil, dass neue Klassen von Parametern und neue von Parametern abhängige Informationen jederzeit nach der Personalisierung und dem Vertrieb der RFID-Tags hinzugefügt werden können.

Der im RFID-Tag gelesene Code entspricht vorzugsweise einer Seriennummer, währenddessen die Parameter des Mobilteilnehmers vom Mobilgerät oder von den Lesebedingungen abhängig sind. Dies hat den Vorteil, dass die angebotenen Informationen auch von der Seriennummer des Produkts abhängig sind.

Die vorliegende Erfindung wird im Folgenden anhand der Figuren näher beschrieben. Es zeigen:
Figur 1 ein Blockschaltbild eines Systems mit einem Mobilgerät, einem RFID-Lesegerät, einem RFID-Tag und einem Fernserver.
Fig. 2 die Struktur einer Meldung mit einem Code gemäss der Erfindung.
Fig. 3 die Struktur einer Meldung mit einem Code und einem mit dem Code verknüpften Parameter gemäss der Erfindung.
Fig. 4 die Struktur eines Codes bei welchem ein Teil durch Parameter ersetzt wird.

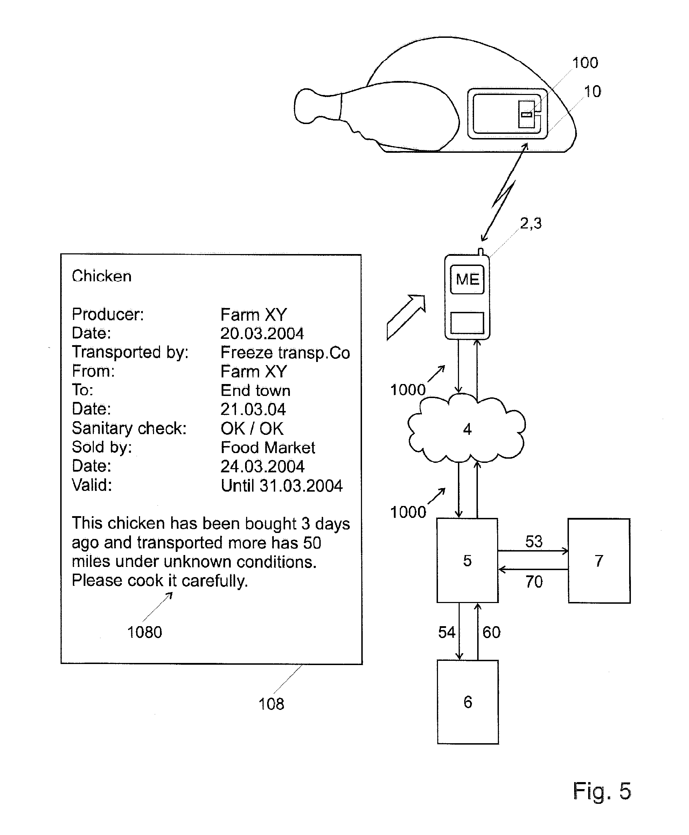

Figur 5 schematisch ein Ausführungsbeispiel der Erfindung.

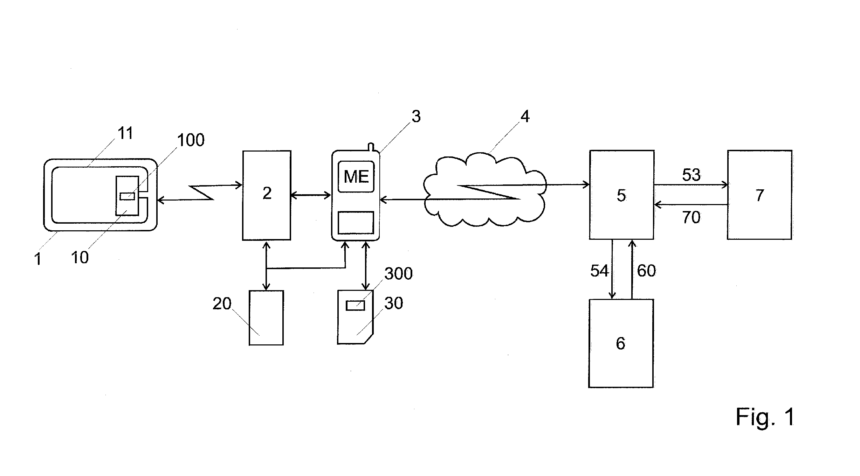

Die Figur 1 zeigt das System, das von einem Benutzer (zum Beispiel einem Mobilteilnehmer) verwendet wird, um mit dem erfindungsgemässen Verfahren Dienstleistungen oder Informationen über ein Produkt zu bestellen. Ein Mobilgerät 3 (zum Beispiel ein Mobilfunktelefon oder ein PDA mit einer Schnittstelle für ein zellulares Mobilfunknetz) kann Kurzmeldungen (zum Beispiel SMS und USSD) und Daten (zum Beispiel IP-Pakete) aus einem Mobilfunknetz 4 empfangen und an dieses Netz senden. Das Mobilfunknetz 4 ist beispielsweise ein GSM, GPRS, HSCSD, EDGE, UMTS oder CDMA-Netz, über welches auch Daten übermittelt werden können. Das Mobilgerät 3 enthält ein Identifizierungsmodul (zum Beispiel eine SIM-Karte 30), um das Gerät durch das Netz 4 zu identifizieren. Eine oder mehrere Software-Anwendungen können von einem Prozessor im Mobilgerät 3 ausgeführt werden.

Das Mobilgerät 3 umfasst ausserdem einen RFID-Leseteil 2, oder ist mit einem solchen Leseteil verbunden (beispielsweise über eine USB, Firewire, PCCard, Compactflash, proprietäre, usw, Verbindung, oder über eine Bluetooth oder WLAN-kontaktlose Verbindung). Das Leseteil 2 umfasst einen Mikrokontroller und mindestens eine Antenne oder Spule, um kontaktlos Daten mit RFID-Komponenten (Tags) in einem Produkt 1 in der unmittelbaren Nähe auszutauschen. Die Datenübertragung erfolgt vorzugsweise im Frequenzbereich 13,56MHz, 900MHz und/oder 860-930MHz. Der Leseteil kann vorzugsweise wahlweise in verschiedenen Frequenzbereichen und mit unterschiedlichen RFIDs arbeiten. Die Tragweite beim Lesen der RFIDs beträgt vorzugsweise zwischen 2 und 10 Metern - je nach Orientierung des Leseteils und des Tags. Die Verbindung erfolgt vorzugsweise im Half-Duplex Modus mit einer ASK Backscatter Modulation.

Das Mobilgerät 3 und/oder das RFID-Lesegerät kann mit einem Messgerät 20 verbunden werden oder ein solches Messgerät beinhalten. Mit dem Messgerät 20 können einer oder mehrere physikalische Parameter, zum Beispiel:
■ die Temperatur
■ der Luftdruck
■ die Feuchtigkeit
■ die Säure
■ eine Beschleunigung
■ der absolute- oder relative Standort des Mobilgeräts 2, 3, der beispielsweise mit einem Satellitenstandortbestimmungsmodul ermittelt werden kann
■ die Geschwindigkeit
■ biometrische Parameter des Benutzers
■ die Zeit
■ usw.
   ermittelt werden. Andere Parameter können manuell vom Benutzer des Mobilgeräts 3 oder des Leseteils 2 eingegeben werden, beispielsweise mit der Tastatur, mit der Stimme, mit Augenbewegungen oder mit anderen Eingabemitteln. Es können somit beispielsweise ein Passwort, ein elektronischer Privatschlüssel, oder Benutzerpräferenzen eingegeben werden, wobei ein Dialog oder ein Menu angezeigt werden kann, um die entsprechende Option zu wählen.

Noch andere Parameter können aus dem Identifizierungsmodul 30, aus dem Mobilgerät 3 und/oder aus einer über ein lokales oder fernes Netz mit diesem Mobilgerät 3 verbundenen Vorrichtung gelesen werden, zum Beispiel:
■ Das Netzwerk 4, in welchem der Mobilteilnehmer momentan angemeldet ist (zum Beispiel das besuchte Netz)
■ Das Heimnetzwerk des Mobilteilnehmers
■ Die bevorzugte Sprache des Mobilteilnehmers, die aus der Identifizierung in der Karte 30, oder aus einem gespeicherten Profil in der Identifizierungskarte 30, im Mobilgerät 3 oder im Netz 4 abgeholt wird.
■ Andere Benutzerpräferenzen
■ Der Saldo oder die Bonität eines Geldkontos, das beispielsweise mit der Identifizierungskarte 30 verbunden sein kann
■ Biometrische Parameter oder Werte des Mobilteilnehmers
■ Merkmale des Mobilgeräts 2,3, zum Beispiel das Modell, der Typ, die Auflösung der Anzeige, die maximale Daten-übertragungsgeschwindigkeit, der verfügbare Speicherplatz, die installierte Softwarebasis, das Betriebssystem, die verfügbaren Treiber, usw.
■ Vorherige Handlungen des Mobilteilnehmers, zum Beispiel frühere Informationsbestellungen oder Entscheidungen, usw.
■ Ein Zähler im Lesegerät, im Mobilgerät und/oder in der SIM-Karte. Damit kann beispielsweise gesichert werden, dass der Inhalt der Hypertext-Seite bei sukzessiven Zugriffe jedesmal geändert wird.
■ usw.

Gewisse Parameter können auch ein Verfalldatum haben, so dass nach dem Verfalldatum keine Information die von diesem Parameter abhängig sein kann, abgeholt werden kann.

Das Produkt 1 umfasst ein oder mehrere Tags. Jedes Tag 10 umfasst mindestens einen Chip und eine Antenne. Jeder Chip 10 enthält einen permanenten Speicherbereich, in welchem während der Herstellung oder während der Personalisierung des Tags ein Code 100 abgelegt wird.

Der Code identifiziert eindeutig jedes bestimmte Tag 1; jedes Tag hat vorzugsweise einen anderen Code 100. Der Code ist vorzugsweise unfälschbar. Ein Code-Herausgeber (beispielsweise ein Netzbetreiber) kann eine Tabelle führen, auf welcher die gültigen, verbrauchten oder verfallenen Codes als solche markiert sind.

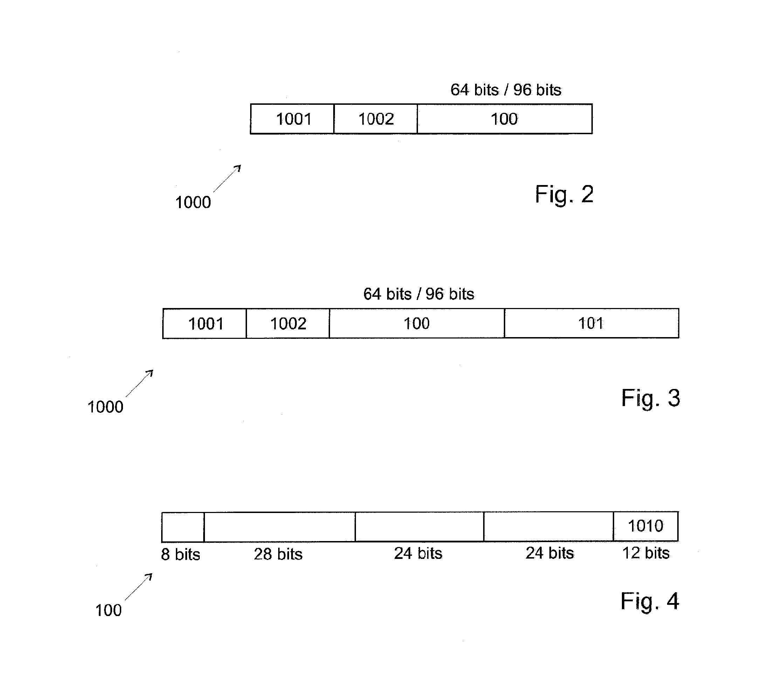

Der Code 100 umfasst vorzugsweise 64, 96 oder mehr Bits und ist hierarchisch organisiert. Die Antwort 1000 des Tags 10 an eine Anfrage des Leseteils 2 umfasst vorzugsweise einen Vorsatz 1001, Redundante Prüfdaten 1002 und erst dann den Code 100 (Fig. 2).

Mehrere Codes in einem Produkt in der Nähe des Lesegeräts 2 können gleichzeitig oder vorzugsweise nacheinander gelesen werden. Die Anfrage des Lesegeräts 2,3 kann einen Nummerbereich angeben und jedes Tag 10 entscheidet anhand dieses Nummerbereichs, mit welchem oder welchen Codes es diese Anfrage beantworten will.

Andere Daten können im Speicherbereich des Chips 10 abgelegt und vom Leseteil 2 gelesen werden.

Der Chip 10 ist vorzugsweise ein Nur-Lese-Chip, der günstig und in kleiner Grösse hergestellt werden kann; zwei Nur-Lese-Chips sind oft billiger als ein einziger wiederbeschreibbarer Chip. Wiederbeschreibbare Chips können aber im Rahmen der Erfindung auch eingesetzt werden.

Codes 100 werden vorzugsweise von einer gemeinsamen Autorität an verschiedene Produkthersteller, Mobilfunknetzanbieter und Mehrwertdienstanbieter verteilt; ein Teil des Codes gibt vorzugsweise die Identität des Anbieters des Produktes 1 an. Der Produktanbieter reserviert eine Reihe von Codes bei der gemeinsamen Autorität und speichert einen Teil dieser Codes in Tags 10 die dann mit den Produkten vertrieben werden. Ein Produkt kann von mehreren Organisationen mit unterschiedlichen Tags versehen werden.

Mindestens eine Anwendung ist im Mobilgerät 3 vorgesehen, um Codes 100 in benachbarten Tags über das Leseteil 2 zu lesen, um weitere Informationen oder Dienste zu bestellen, wie später erläutert.

Das Lesen eines Codes wird vorzugsweise vom Mobilgerät 3 initiiert; möglich ist beispielsweise, dass das Mobilgerät stets oder periodisch nach benachbarten Tags sucht und Codes in gefundenen Tags liest und bearbeitet oder weiterleitet. In einer anderen, stromsparenden Variante wird das Lesen vom Benutzer des Mobilgeräts 3 initiiert, der eine entsprechende Anwendung startet oder einen Befehl eingibt, wenn er ein Tag lesen will. Das Lesen der Tags mit dem Mobilgerät 3 oder mit einem anderen Gerät kann auch von einer externen Vorrichtung (zum Beispiel einer Verkaufsstelle oder einem Automaten) über eine Schnittstelle im Nahbereich (zum Beispiel Bluetooth oder WLAN) über das Mobilfunknetz 4, oder über einen Link auf einer besuchten WEB oder WAP-Seite initiiert werden.

Einfache Filter und Bearbeitungsmittel können als Teil einer Anwendung im Mobilgerät 3 und/oder im Leseteil 2 vorgesehen werden, um einen gelesenen Code zu bearbeiten. Die Anwendung kann beispielsweise nur gewisse Bereiche von Codes bearbeiten und weiterleiten. Redundanzprüfungen können auch vorgesehen werden, um nicht plausible und fehlerbehaftete Codes zu löschen. Bereits verwendete Codes werden vorzugsweise in einer Datenbank im Mobilgerät 3 zwecks zukünftiger Kontrolle, statistischen Bewertungen und Backups gespeichert.

Je nach Anwendung kann auch ein Passwort oder eine andere Authentifikation verlangt werden, bevor ein Code gelesen oder weitergeleitet wird. Das Passwort kann beispielsweise auf einen versteckten, freilegbaren Teil des Produkts 1 gedruckt werden, oder es wird dem Benutzer über einen anderen Kanal mitgeteilt. Die Auswahl der verwendeten Codes kann in diesem Fall von der Liste der bekannten Passwörter abhängig sein.

In einer Ausführungsform besteht das Passwort aus einem Teil des Codes 100 oder kann mit einer Funktion aus diesem Code ermittelt werden. Das Passwort kann sich beispielsweise aus einer mit einem öffentlichen Schlüssel prüfbaren Signatur des Codes ergeben. In diesem Fall kann das Passwort aus dem Code nur dann ermittelt werden, wenn der unbefugte Dritte die entsprechende Funktion oder den privaten Signierungsschlüssel kennt. Diese Ausführungsform hat den Vorteil, dass die Anwendung die Gültigkeit des Passwortes alleine anhand des Codes prüfen kann.

In einer anderen Variante wird die Gültigkeit des Passworts anhand einer Tabelle in der SIM-Karte 30, im Mobilgerät 3 oder in einem fremden Server geprüft.

In noch einer weiteren Variante wird das Passwort im Tag 10 gespeichert und vom Tag geprüft. Diese Variante erfordert jedoch teure Tags, die auch Passwörter speichern, empfangen und vergleichen können.

Der im Tag 1 gelesene Code wird mit mindestens einem bereits erwähnten Parameter in eine Bestellmeldung (zum Beispiel in eine Kurzmeldung oder vorzugsweise in ein GPRS- oder UMTS-Paket) verpackt.

In der Variante der Figur 3 umfasst die Bestellungsmeldung 1000 mindestens einen zusätzlichen bereits erwähnten Parameter 101, der mit dem 64- oder 96-bitstelligen Code verknüpft wird. In der Variante der Figur 4 wird ein Teil des Codes 100 (im dargestellten Beispiel die 16 letzten Bits) durch einen oder mehreren numerischen Parameter 1010 ersetzt. Es ist auch möglich, die Bestellungsmeldung in mehrere Datagramme zu teilen und den Code und die Parameter separat zu senden.

Die Bestellungsmeldung wird über das Mobilfunknetz 4 an einen Server 5 an eine bekannte Adresse gesendet, vorzugsweise einen Server innerhalb der Infrastruktur 40 des Mobilfunknetzes 4 (Figur 1). Die Dienstleistungs-Bestellmeldung wird optional vom Mobilgerät 3 oder von der SIM-Karte 30 signiert und/oder mit einem Zeitstempel versehen.

Der Server 5 verwaltet Bestellmeldungen mit Codes und Parameter, die von mehreren oder möglicherweise allen RFID-Lesern 2,3 empfangen werden. Andere, komplexere Filter können im Server 5 vorgesehen werden, um Codes aus unterschiedlichen Bereichen verschieden oder gar nicht zu behandeln.

Ein Passwort kann auch vom Server 5 verlangt werden, damit der empfangene Code überhaupt behandelt wird; dieses Passwort kann ähnlich wie im Mobilgerät aus dem Code selbst abgeleitet oder anhand einer Tabelle geprüft werden. Das Passwort wird beispielsweise zusammen mit dem Code 100 in einer Meldung an den Server 5 übertragen, oder separat im Rahmen eines Dialogs.

Der Server 5 kann auch die Identität des Benutzers des Mobilgeräts 3 prüfen. Dies ist umso zuverlässiger, wenn der Server 5 vom Betreiber des Mobilfunknetzes 5 verwaltet wird. In diesem Fall kann die Identität des Benutzers beispielsweise anhand der IMSI (International Mobile Subscriber Identity) oder einer anderen Mobilteilnehmer-Identität in der SIM-Karte zuverlässig ermittelt werden. Zugriff auf gewisse Informationen und Dienstleistungen werden nur gewissen Benutzern zur Verfügung gestellt (beispielsweise Mobilteilnehmern, die über ein entsprechendes Abonnement verfügen, die einen genügenden Saldo auf einem Geldkonto vorweisen, oder deren Profil die Bereitstellung der Dienstleistung erlaubt).

Falls das Passwort falsch ist, oder wenn die gewünschte Information oder Dienstleistung aus einem anderen Grund nicht bereitgestellt werden kann, wird vorzugsweise eine Meldung an den Benutzer geschickt (beispielsweise über SMS, USSD, oder Internet). Nach mehreren Fehlversuchen können aus Sicherheitsgründen weitere Versuche definitiv oder temporär gesperrt werden. Auf diese Weise kann verhindert werden, dass gültige Codes durch mehrmalige Versuche erraten werden.

Der Server 5 ist über Internet oder ein Intranet mit einem Namen-Dienstserver 6 verbunden, in welchem jeder Code 100 und Parameter 101, 1010 mit der entsprechenden elektronischen Adresse einer elektronischen Hypertext-Seite verbunden sind. Es kann somit für jedes einzelne, individuelle Produkt und für jeden entsprechenden Parameter oder jedes Set von Parametern auf eine andere Adresse zugegriffen werden. Verschiedene Benutzer mit dem gleichen Produkt, oder ein selber Benutzer unter verschiedenen Bedingungen, erhalten somit möglicherweise eine andere Adresse.

Eine Anfrage 50 mit dem gerade empfangenen Code 100 und Parametern 101, 1010 wird vom Server 5 an den Namen-Dienstserver 6 geleitet, der mit der entsprechenden elektronischen Adresse 60 antwortet. Die elektronische Adresse besteht beispielsweise aus einem URL oder einer anderen Adresse für ein TCP-IP Netz.

Der Namen-Dienstserver 6 kann vom Betreiber des Servers 5 verwaltet werden und/oder von externen Entitäten (beispielsweise von der Organisation, die die Codes 100 an die verschiedenen Firmen verteilt). Mehrere Namen-Dienstserver können miteinander verbunden werden, so dass die gewünschte Adresse in einem anderen Namen-Dienstserver gesucht wird, wenn sie sich nicht im Server 6 befindet. Dies erlaubt zum Beispiel einem Mobilfunknetzbetreiber, auch Codes von anderen Organisationen zu bearbeiten. Ein lokaler Cache 6 eines externen Namendienstes kann auch im Server 5 oder im Domain des Servers 5 vorgesehen werden; dieser Cache kann beispielsweise nur die Adressen enthalten, die den Codes entsprechen, die sich in Wertkarten des Mobilfunknetzbetreibers befinden.

Der Benutzer des Mobilgeräts 1 kann somit alle Codes 100 und Parameter 101, 1010 von allen Dienstleistungsanbietern stets an den gleichen Zielserver 5, der aus dem Namen-Dienstserver 6 oder dem Netz von Namen-Dienstservern 6 die Adresse der Seite ermittelt, anhand welcher die gewünschte Information oder Dienstleistung bereitgestellt wird. Die Behandlung der Bestellmeldung ist somit nur vom Code und von dem oder den damit verknüpften Parametern in der Meldung abhängig. Gleiche Meldungen, die an unterschiedliche Server 5 mehrerer Dienstleistungsanbieter gelangen, können somit die Bereitstellung der genau gleichen Dienstleistung oder Information verursachen.

Die Verknüpfung im Namen-Dienstserver 6 zwischen einem Code 100 und Parametern 101, 1010 und einer Adresse kann vorzugsweise vom Anbieter der gewünschten Information jederzeit geändert werden (beispielsweise über ein dediziertes WEB-Formular). Dies erlaubt, die elektronische Adresse einer Seite oder eines Domains zu ändern, ohne die Endbenutzer informieren zu müssen.

Die Adresse der gewünschten Seite kann somit eindeutig allein anhand des Codes, der im Tag 1 gespeichert ist, und dem oder den übermittelten Parametern, gefunden werden; die Seite, auf welche zugegriffen wird, ist somit völlig unabhängig von der Adresse oder Telefonnummer des Servers 5. Da viele Produkte 1 markiert werden müssen und da aus Sicherheitsgründen nicht alle Codes verwendet werden können, müssen genügend frei verfügbare Bits für die Codes vorgesehen werden, einfache IP-Nummern zum Beispiel, würden möglicherweise nicht ausreichen, da sehr viele mögliche Kombinationen bereits zugeteilt worden sind. Es wird vorzugsweise ein anderes, selbständiges Seiten-Adressierungssystem verwendet.

Der Server 5 empfängt die Antwort 60 vom Namen-Dienstserver 6 mit der gewünschten Seitenadresse und greift auf die entsprechende Seite im Server 7 zu, oder auf ein Netz mit mehreren lokalen oder fernen Servern (Anfrage 51 und Antwort 70 auf Figur 1). Die Hypertext-Seite kann statisch sein; in einer bevorzugten Ausführungsform wird sie jedoch dynamisch in Abhängigkeit der übermittelten Parameter erzeugt.

Die Seite im Server 7, auf welche der Server 5 zugreift, umfasst möglicherweise einen Hypertext-Inhalt in einer Markup Sprache. In einer Variante umfasst diese Seite einen XML-Inhalt (eXtended Markup Language). In einer anderen Variante umfasst die Seite einen PML-Inhalt (Product Marking Language). Die Seite kann auch SOAP-Protokol (Simple Object Access Protocol), .NET- Framework oder andere Web-Dienste unterstützen, mit welchen der Server 5 und schlussendlich das Mobilgerät 3 auf Dienste und Objekte des Servers 7 zugreifen kann. In diesem Fall umfasst das erfindungsgemässe Verfahren die Bereitstellung von ausführbaren Programm-Code-Elementen oder SOAP- und/oder .NET-Diensten.

Der Server 5 lädt die gewünschte Seite aus dem Server 7 fern, und/oder greift auf den gewünschten Dienst (oder das Objekt an der angegebenen Adresse) zu, um die gewünschte Dienstleistung oder Information dem Benutzer des Mobilgeräts 1 bereitzustellen. Der Benutzer kann die gewünschte Information beispielsweise mit einem normalen Browser wiedergeben.

Die Figur 3 zeigt schematisch den Datenfluss in einem Ausführungsbeispiel der Erfindung. Im dargestellten Beispiel wird ein Produkt 1 (in diesem Fall ein Hähnchen) mit einem RFID-Tag 10 markiert, in welchem ein Code 100 abgelegt wird. Der Code wird mit einem RFID-Lesegerät 2 in einem Mobilgerät 3, oder mit einem kombinierten Mobilgerät mit RFID-Lesegerät 2,3 gelesen. Andere Parameter werden vom Gerät 2,3 ermittelt, (in diesem Fall die Zeit und der Standort). Der Code und die Parameter werden in eine Meldung 1000 verpackt, die über das Mobilfunknetz 4 an den zentralen Server 5 gesendet wird. Der Server 5 sendet diesen Code und die Parameter als Abfrage 54 an den Namen-Dienstserver 6, der mit der elektronischen Adresse einer entsprechenden Seite antwortet. Der Server 5 greift dann auf die entsprechende Adresse 53 im Server 7 zu, um die entsprechende Information, beispielsweise als PML-Inhalt, oder die Dienstleistung abzuholen und an das Mobilgerät zurückzusenden. Die Information kann als statische oder vorzugsweise dynamische, von den Parametern abhängige, Seite wiedergegeben werden, und beispielsweise mit einem HTML- oder WAP-fähigen Browser auf dem Lesegerät 2,3 angezeigt, abgelegt oder gedruckt werden. Als Variante kann eine von den Parametern abhängige Dienstleistung aus dem Server 7 ferngeladen werden, beispielsweise als JAVA-Applet, als ActiveX, als JavaScript oder als Webdienst, und dem Lesegerät 2, 3 zur Verfügung gestellt oder im Lesegerät 2,3 ausgeführt werden.

Im dargestellten Beispiel umfasst die angezeigte Information 108 Daten, die vom Code 100 abhängig sind, unter anderem den Herstellungsort und das Herstellungsdatum des Hähnchens, das Datum des Transports, der Ankunft im Geschäft und des Verkaufs, usw. Diese Daten werden im Server 7 von verschiedenen Organisationen vor dem Verkauf des Hähnchens registriert, beispielsweise als XML-, PML oder in einer Datenbank. Die angezeigte Information 108 enthält auch einen Teil, welcher von den zusätzlichen Parametern abhängig ist. Im dargestellten Beispiel wird der Benutzer informiert, dass das Hähnchen bereits vor drei Tagen verkauft wurde und dass er ausserdem seit dem Verkauf transportiert wurde - der aktuelle Standort ist entfernt vom Verkaufsstandort. Da die Transportbedingungen unbekannt sind, wird in diesem Fall ein Sicherheitshinweis angezeigt.

Die dargestellte Information oder Dienstleistung kann auch verwendet werden, um externe Vorrichtungen zu steuern (beispielsweise Öfen oder ein Mikrowellenherde) welche mit Produkt- und Parameterabhängigen Daten aus dem Fernserver 7 gesteuert werden können.

## Patentansprüche

1. Verfahren, um Information über ein Produkt (1) zu erhalten, mit folgenden Schritten:
das Produkt (1) wird mit einem Code (100) markiert, der in einem RFID-Tag (10) abgelegt ist,
der benannte Code (100) wird kontaktlos mit einem RFID-Lesegerät (2, 3) gelesen,
das benannte Lesegerät (2, 3) verpackt den benannten Code in eine Meldung,
das benannte Lesegerät (2, 3) sendet die benannte Meldung über ein Telekommunikationsnetz (4) an einen Namen-Dienstserver (6),
der benannte Namen-Dienstserver (6) antwortet mit der Adresse einer oder mehrerer Hypertext-Seiten,
es wird anhand der benannten Hypertext-Seiten auf die gewünschte Information (7) zugegriffen,
**dadurch gekennzeichnet, dass** das Lesegerät (2, 3) mindestens einen Parameter (101, 1010), der nicht aus dem benannten RFID-Tag gelesen wird, in die benannte Meldung verpackt,
und dass die benannte Adresse sowohl vom benannten Code (100) als auch von den benannten Parametern abhängig ist.

2. Das Verfahren des Anspruchs 1, in welchem der benannte Code (100) das spezifische einzelne Produkt (1) **kennzeichnet**,
und in welchem die benannte Hypertext-Seite von diesem Produkt abhängig ist.

3. Das Verfahren eines der Ansprüche 1 bis 2, in welchem das benannte Lesegerät (2) mit einem Mobilgerät (3) verbunden wird,
wobei das benannte Telekommunikationsnetz (4) ein Mobilfunknetz umfasst.

4. Das Verfahren eines der Ansprüche 1 bis 3, in welchem das benannte Lesegerät (2) eine Identifizierungskarte umfasst,
und in welchem der benannte Parameter aus der benannten Identifizierungskarte (30) gelesen wird.

5. Das Verfahren des Anspruchs 4, in welchem der benannte Parameter (101, 1010) eine Mobilteilnehmer-Identifizierung oder Rufnummer umfasst.

6. Das Verfahren des Anspruchs 4, in welchem der benannte Parameter (101, 1010) einen Saldo auf einem Geldkonto der Identifizierungskarte (30) umfasst.

7. Das Verfahren des Anspruchs 3, in welchem der benannte Parameter (101, 1010) mittels dem benannten Mobilgerät (3) ermittelt wird.

8. Das Verfahren des Anspruchs 7, in welchem der benannte Parameter (101, 1010) vom Mobilteilnehmer eingegeben wird.

9. Das Verfahren eines der Ansprüche 1 bis 8, in welchem der benannte Parameter (101, 1010) von einem Passwort oder von einem elektronischen Schlüssel abhängig ist.

10. Das Verfahren eines der Ansprüche 1 bis 9, in welchem der benannte Parameter (101, 1010) von einem vorbestimmten Benutzerprofil abhängig ist.

11. Das Verfahren eines der Ansprüche 1 bis 10, in welchem der benannte Parameter (101, 1010) vom Standort des Mobilteilnehmers abhängig ist.

12. Das Verfahren eines der Ansprüche 3 bis 11, in welchem der benannte Parameter vom Netzwerk (4), in welchem der Mobilteilnehmer momentan angemeldet ist, abhängig ist.

13. Das Verfahren eines der Ansprüche 3 bis 12, in welchem der benannte Parameter vom Heimnetzwerk (4) des Mobilteilnehmers abhängig ist.

14. Das Verfahren eines der Ansprüche 1 bis 13, in welchem der benannte Parameter von der Zeit abhängig ist.

15. Das Verfahren eines der Ansprüche 1 bis 14, in welchem der benannte Parameter eine bevorzugte Sprache angibt.

16. Das Verfahren eines der Ansprüche 1 bis 15, in welchem der benannte Parameter von einem mit dem benannten Lesegerät verbundenen Messgerät (20) abhängig ist.

17. Das Verfahren eines der Ansprüche 1 bis 16, in welchem der benannte Parameter von einem Zähler im Lesegerät und/oder in der Identifizierungskarte abhängig ist.

18. Das Verfahren eines der Ansprüche 1 bis 17, in welchem das benannte Lesegerät (2, 3) den benannten Code (100) mit dem benannten Parameter (101) verknüpft.

19. Das Verfahren eines der Ansprüche 1 bis 18, in welchem das benannte Lesegerät (2, 3) einen Teil des benannten Codes (100) durch den benannten Parameter (1010) ersetzt.

20. Das Verfahren des Anspruchs 19, in welchem alle vom benannten Namendienstserver (6) empfangenen und in eine Adresse übersetzte Codes (100) die gleiche Anzahl von Bits enthalten.

21. Das Verfahren eines der Ansprüche 1 bis 20, in welchem mindestens ein zusätzlicher Parameter im benannten Telekommunikationsnetz (4) in die benannte Meldung verpackt wird,
und in welchem die benannte Adresse sowohl vom benannten Code als vom benannten zusätzlichen Parameter abhängig ist.
